# EUROPEAN PATENT APPLICATION

(11) **EP 2 124 157 A1**
(43) Date of publication of application: **25.11.2009**
(21) Application number: 08700031.1
(22) Date of filing: 02.01.2008
(51) Int. Cl.: G06F 17/30

(54) **SYSTEM AND METHOD FOR WEBSITE NAVIGATION**

(30) Priority: 04.01.2007 CN 200710002349
(71) Applicant: Alibaba Group Holding Limited, Grand Cayman (KY)
(72) Inventor: SHEN, Shaofeng, Zhejiang 310099 (CN)
(74) Representative: Freeman, Jacqueline Carol
(86) International application number: PCT/CN2008/070004
(87) International publication number: WO 2008/086740

(57) **Abstract**

A system and method for website navigation are provided to implement users' individually defined website navigation. The system and method include a website navigation server and a database, which stores the navigation items of relationships between website pages and character strings respectively according to the specific user. Upon the website page redirection requests with character strings from the user, the website navigation server finds the matched address according to the character strings in the stored navigation items of the current user and then redirects the page to the corresponding address.

## Description

This application claims priority to Chinese Patent Application No. 200710002349.9, entitled "WEBSITE NAVIGATION SYSTEM AND METHOD THEREOF", filed with the Chinese Patent Office on January 4, 2007, which is incorporated herein by reference for all purposes.

### Field of the Invention

The present invention relates to the network field, and particularly to a website navigation system for implementing customized navigation in a website and a navigation method.

### Background of the Invention

Networks have become a necessary part of people's lives. People obtain various kinds of services via networks. For facilitating users browsing website information to obtain a website service, a website navigation system is needed to prevent the users from losing themselves during browsing through the website and to facilitate the users returning to the front page of the website or a page of other relevant content.

At present, the basis of a websites navigation system is column construction of a website. In addition, auxiliary navigation means may be designed under columns. For example, an auxiliary menu is usually set under a main menu of each column to indicate the page where the user is currently located in the website. It is usually simply represented as: front page>first-level column>second-level column>third-level column>...>content page. Apparently, if a user comes to a website from a certain page, the user is apt to lose himself in the website if the user is not directed by a detailed website navigation.

However, the existing website navigation system is fixed for all users, but individual user requirements differ from each other. Therefore, in order to satisfy the requirements of more users, website managers hope that as many items of content as possible be displayed on a page (especially on the front page). However, at present the amount of content that can be displayed on each page is limited, which makes entry into a certain page through multiple levels of menus popular. If a user often gives attention to a certain board of a forum or hopes to give attention to a certain topic in a short period, the user needs to browse multiple columns and pages of content level by level to arrive at a desired page, which is time-consuming and is apt to result in the failure to find the board or topic. In an existing solution, the user utilizes the "add to favorites" technique to store a Uniform Resource Locator (URL) address corresponding to the desired board or topic in a local computer of a client of the user and the user can enter into the page corresponding to the stored URL address rapidly by utilizing the "add to favourites" technique. However, if the user uses another computer and the URL address information of the page is not stored in the other computer, the user usually needs to browse multiple columns and pages of content level by level to find the desired page considerating of the difficulty of remembering the URL address.

In view of the above, the website www.urlcut.com discloses a website navigation system and a corresponding navigation method for customized navigation. The website navigation system includes at least a web server, a domain name sub-system and a database. A corresponding relation between a URL address input by the user and a character string input by the user is stored in the database. If the user inputs a character string "digital" and a corresponding page is a digital channel (for selling digital products) of the website www.taobao.com, the database stores a corresponding relation between "digital" and the URL address http://www.taobao.com/vertical/digital/index.php?from=top of the digital channel of the website www.taobao.com.

In the above existing navigation method:

First, when the user inputs http:/www.urlcut.com/digital in the URL address, the client of the user initiates a connection request to the Internet, the domain name sub-system of the Internet finds a web server corresponding to www.urlcut.com and sends the connection request to the web server.

Subsequently, the web server, upon receiving the connection request, connects with the client, then finds the URL address corresponding to "digital" in the database and redirects the connection request from the client to a server of a website corresponding to the URL address (i.e. the server of the website www.taobao.com).

Next, the server of the website www.taobao.com, upon receiving the connection request, connects with the client and then transmits the data of the page corresponding to the URL address to the client to display.

With the above website navigation system, a user can customize navigation and enter into a page that the user desires to access rapidly without the need of storing the URL address of the desired page in the local computer, while needing only to pre-store a corresponding relation between the URL address of the desired page and a certain character string at the website with the domain name www.urlcut.com and to input www.urlcut.com.this ("this" is the certain corresponding character string) to the URL address. However, the above website navigation system and website navigation method still have the following disadvantages.

First, the website navigation provided by the website www.ur;cut.com can be inconvenient and prone to conflict. The database of the website navigation system needs to store the one-to-one corresponding relation between the URL address of the desired page and a certain character string and the number of usual easy-to-remember character strings are very limited, therefore conflict often arises when different users customize navigations. Hereinafter, still taking "digital" as an example, after a user, "user1", creates the corresponding relation between the URL address of the digital channel of the website www.taobao.com and "digital" at the website www.urlcut.com, a conflict arises if another user attempts to create a corresponding relation between another page and "digital". Therefore, the other user has to create a corresponding relation between a character string that is not stored in the database and the URL address of the page. However, with the increasing use of the navigation customization function at the website, the user needs a long time to determine character strings that are not stored in the database, which results in disadvantages of the limited use of this website navigation and thus influences the use rate of customized navigations.

Second, in each navigation process, the client of the user shall access the website urlcut first and then access the target website. In other words, the client connects with the website urlcut first and then connects with the target website. In the whole process, two connections are needed, which may result in a delayed access and a waste of network resource.

Third, since the above websites provide cross-website navigation service, if instability arises at the websites, cross-website navigation service cannot be provided. In other words, if "user1" wants to access the digital channel of the website www.taobao.com through the customized "digital", "user1" shall be restricted by the stability of the websites providing the customized website navigation service. In addition, overseas websites may be utilized to provide the website navigation service, however, there still exists the non-stability of the websites. Additionally, there can be low access speed if the user accesses a page through the above website navigation service.

Finally, after the user customizes multiple website navigations by using the above websites navigation service, if the user does not store or remember corresponding relations between character strings and URL addresses, the user is apt to forget or confuse the corresponding relations between the character strings and the URL addresses during a subsequent navigation using the website. The existing website navigation system does not provide a function of subsequently modifying or deleting the corresponding relations between the character strings and the URL addresses by the user and a function of displaying all corresponding relations between the character strings and the URL addresses customized by each user, thereby the corresponding relations between the character strings and the URL addresses are not used, and thus the storage capability of the database of the website navigation system is wasted and corresponding relations between these character strings and other URL addresses are not customized, which results in a waste of resource.

### Summary of the Invention

An object of the present invention is to provide a website navigation system and a website navigation method, so as to solve the existing problems of inconvenience and conflicts in customization of navigations, which influences the use rate of customized navigations and results in a waste of resource in the existing techniques.

To attain the above object, the present invention provides a website navigation system including at least a website navigation server and a database, wherein: the database is adapted to store corresponding relations between page characteristic information and character string information in all navigation items of each user by treating each user as a unit; and the website navigation server is adapted, upon receiving a page forward request including character string information sent from a client of a user, to find page characteristic information corresponding to the character string information from all navigation items of the user pre-stored in the database and to forward to a corresponding page.

Preferably, the website navigation server includes: an interface unit, which is adapted to establish an interaction between the website navigation server and the client of the user and comprises: a navigation item addition request receiving sub-unit and a page forward request receiving sub-unit, wherein the navigation item addition request receiving sub-unit is adapted to receive a navigation item addition request comprising page characteristic information and corresponding character string information, the navigation item addition request being sent from the client; the page forward request receiving sub-unit is adapted to receive the page forward request comprising the character string information, the page forward request being sent from the client; and the processing unit, which is adapted to process the navigation item addition request and the page forward request sent from the interface unit and comprises a navigation item addition request processing sub-unit and a page forward request processing sub-unit, wherein: the navigation item addition request processing sub-unit is adapted to store a corresponding relation between the page characteristic information and the character string information in website navigation information of the user of the database upon receiving the navigation item addition request; the page forward request processing sub-unit is adapted to first find page characteristic information corresponding to the character string information from the website navigation information of the user stored in the database and then to forward to a corresponding page upon receiving the page forward request.

Preferably, the processing unit further comprises: a first judging sub-unit adapted to judge whether the page corresponding to the page characteristic information carried in the navigation item addition request is a page of a current website, to transmit a positive determining result to the navigation item addition request processing sub-unit and to return failure information if the first judging sub-unit judges that the page is not a page of the current website.

The processing unit further comprises: a second judging sub-unit adapted, upon receiving the navigation item addition request, to compare the character string information carried in the request with character string information of all navigation items of the user pre-stored in the database; if all navigation items the user pre-stored in the database comprises the same character string information as that in the navigation item addition request, to return failure information; otherwise, to send a negative comparing result to the navigation item addition request processing sub-unit.

The interface unit further comprises: a receiving sub-unit for processing a navigation information request adapted to receive from the client a request for modifying and/or deleting information of the navigation items; the processing unit further comprises: a navigation information request processing sub-unit adapted to modify and/or delete corresponding navigation items of the website navigation information of the user stored in the database according to the received request.

The website navigation server is a separate server connected with the web server or an application module arranged in the web server. The database is a server connected with the website navigation server or is integrated in the website navigation server.

A website navigation method, comprising the following steps: (1) storing corresponding relations between page characteristic information and character string information of all navigation items of each user by treating each user as a unit and (2) upon receiving a page forward request comprising character string information sent from a client of a user, finding page characteristic information corresponding to the character string information from all pre-stored navigation items of the user and forwarding to a corresponding page.

Step 1 further comprises: (A1) receiving a navigation item addition request comprising page characteristic information and character string information sent from the client and (A2) storing a corresponding relation between the page characteristic information and the character string information in website navigation information of the user of a database.

Between the steps A1 and A2, the method further comprises: comparing the character string information carried in the navigation item addition request with character string information of all navigation items of the user pre-stored in the database; if all the pre-stored navigation items of the user comprises the same character string information as that in the navigation item addition request, returning failure information to prompt the user to input new character string information; otherwise, going to the step A2.

Between the steps A1 and A2, the method further comprises: judging whether the page corresponding to the page characteristic information carried in the navigation item addition request is a page of a current website; if the first judging sub-unit judges that the page is a page of the current website, going to the step A2; otherwise, returning failure information.

The method further includes: (3) receiving from the client a request for modifying and/or deleting information of the navigation items and modifying and/or deleting the information of the navigation items of the user pre-stored in the database correspondingly according to the request.

A website navigation system includes a web server and a database, wherein the web server includes an interface unit and a processing unit, wherein: the interface unit is adapted to establish an interaction between the web server and a client of a user, and to send a navigation item addition request comprising page characteristic information and corresponding character string information and a page forward request comprising character string information from the client; the processing unit is adapted, upon receiving the navigation item addition request, to first determine that the page corresponding to the page characteristic information carried in the navigation item addition request is a page of a current website and then to store a corresponding relation between the page characteristic information and the character string information in website navigation information of the user of the database; upon receiving the page forward request, to search for page characteristic information corresponding to the character string information carried in the page forward request in the database and then to forward to a corresponding page; the database is adapted to store corresponding relations between page characteristic information and character string information of all navigation items of the user in website navigation information of each user by treating each user as a unit.

Preferably, the interface unit comprises: a navigation item addition request receiving sub-unit adapted to receive and send the navigation item addition request comprising the page characteristic information and corresponding character string information from the client; a page forward request receiving sub-unit adapted to receive and send the page forward request comprising the character string information from the client; the processing unit comprises: a navigation item addition request processing sub-unit adapted to determine that the page corresponding to the page characteristic information is a page of a current website, to store the corresponding relationship between the page characteristic information and the character string information in the website navigation information of the user of the database upon receiving the navigation item addition request; a page forward request processing sub-unit adapted to first find page characteristic information corresponding to the character string information from the website navigation information of the user stored in the database and then to forward to a corresponding page upon receiving the page forward request.

Preferably, the database is a separate server connected with the web server or is arranged in the web server.

A website navigation method includes: (1) treating each user as a unit to store corresponding relations between page characteristic information and character string information of all navigation items of each user in a database and (2) upon receiving a page forward request comprising character string information sent from a client of a user, establishing a connection between a web server and the client, determining the page is a page of a current website, finding page characteristic information corresponding to the character string information carried in the page forward request from all navigation items of the user pre-stored in the database and forwarding to a corresponding page, by the web server.

Preferably, the method further includes: (3) receiving from the client a request for modifying and/or deleting information of the navigation items and modifying and/or deleting the pre-stored information of the navigation items of the user correspondingly according to the request.

Compared with the prior art, the present invention has the following advantages:

First, with the technical solution of the present invention, a user can forward at once from a page to another page of a website rapidly. Corresponding relations between page characteristic information and character string information of all navigation items of each user are stored in a database by treating each user as a unit. Therefore, when customized navigations are set, it is only required that character strings of all navigation items of this user are different from each other and it is not required that the character string input by the user this time is different from character strings of all navigation items stored in the database. Therefore, there does not exist the problem of conflict between character strings customized by different users and also the user can customize character strings with a good extensibility, thus the website navigation of the present invention has a good availability. In other words, in this manner, each user can customize infinite numbers of pages and navigation configurations since the users are independent from each other and do not conflict, i.e., in the present invention the customized website navigation for each user is independent from others and the customized website navigations of respective users do not conflict. Therefore, the solution of the present invention has a good availability.

Second, if a website of a desired page is the one providing customized navigation service, a web server does not need to redirect a connection request to a target website. Usually, the web server forwards the connection request to an application module processing the page where the application module sends page data via the web server to the client to display. In this case, only a connection between the web server and the client is needed unlike the need of two connections in the prior art, thereby improving the navigation speed.

Then, the present invention can provide not only navigation in a current website but also cross-website navigation. In the prior art the website urlcut provides cross-website navigation service, which fails in the case that non-stability arises at the website. In the present invention, whether to provide cross-website navigation may be determined according to situations of respective websites (e.g. resource).

Finally, in the present invention the user can delete or modify the pre-stored navigation configurations of its own with convenience. Moreover, if the user deletes unused or unconcerned page navigations, the use rate of storage space of the database can be improved.

### Brief Description of the Drawings

Figure 1 is a principle structural schematic diagram of a website navigation system according to the present invention.

Figure 2 is a flowchart of a website navigation method according to the present invention.

Figure 3 is another structural schematic diagram of the website navigation system according to the present invention.

Figure 4 is a flowchart of a navigation method based on Figure 3 if cross-website navigation is not supported.

### Detailed Description of the Invention

Hereinafter, the present invention is described in detail with reference to the attached drawings and embodiments.

The inventor considers that navigations of respective users will not conflict if navigation configurations of the respective users are independent from each other, thus it does not require the respective users to customize different character string information. In this manner, the number of navigations that can be customized is infinite. Therefore, a user can forward one time from any page to a desired page after the user logs on a website, attaining the object of rapid entry into a certain page.

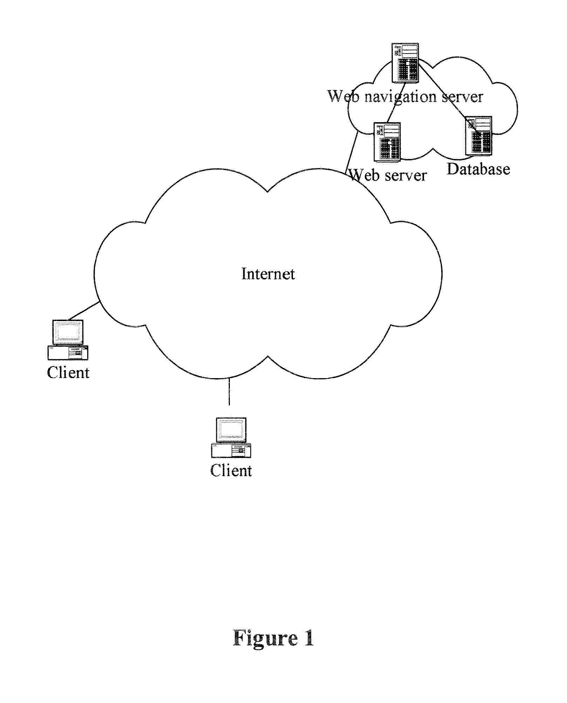

Figure 1 is a principle structural schematic diagram of a website navigation system according to the present invention. The website navigation system includes: a web server, a website navigation server and a database. The web server is connected with the website navigation server. The database is connected with the website navigation server. The web server is connected with the client via the Internet.

The website navigation server is adapted, upon receiving a page forward request including character string information sent from a client of a user, to find page characteristic information corresponding to the character string information from all navigation items of the user pre-stored in the database and to forward to a corresponding page. The website navigation server includes an interface unit and a processing unit.

The interface unit is adapted to establish an interaction between the website navigation server and the user, i.e., to receive a request from the user and to return a result of processing the request by the website navigation server. Usually, the interface unit is implemented by software, and may be embodied as adding a link (e.g., a customized website navigation) in an existing page. The user may activate the link to enter into an interactive interface to implement the interaction between the interactive interface and the user. For example, the link is provided on the top of all pages of a website; in addition, in the present invention the java description language (javascript) technique is utilized to hide the link on the pages in consideration that the overall effect of the pages after the link is added is not destroyed. Only if the mouse of the user passes through the location of the pages where the link is hidden on, is the link displayed. Of course, the presenting form of the link is not limited to a word link. For example, a page characteristic information input block and a corresponding character string information input block are configured on an existing page and if the user inputs data to an input block or activates the input block, an interactive interface is connected with the user to implement the interaction between the interactive interface and the user.

The interactive interface may include: an interactive interface for adding a navigation item, an interactive interface for page forwarding and an interactive interface for managing navigation items. The interactive interface for adding a navigation item includes at least an input block for setting the page characteristic information and an input block for inputting the character string information. The page characteristic information refers to information according to which a unique page can be determined, such as a URL address of a page and a file name of a page. The interactive interface for page forwarding includes at least an input block for setting the input character string information. The interactive interface for managing navigation items is adapted to display customized navigation items of the user and to receive a request for deleting or modifying information of the navigation items.

According to a function, the interface unit is further classified into a navigation item addition request receiving sub-unit and a page forward request receiving sub-unit. Preferably, the interface unit may further include a receiving sub-unit for processing a navigation information request and a returning sub-unit. The navigation item addition request receiving sub-unit is adapted to receive from a client of the user a navigation item addition request including the page characteristic information and corresponding character string information. The page forward request receiving sub-unit is adapted to receive from the client a page forward request including the character string information and instructing to forward to a corresponding page. The receiving sub-unit for processing a navigation information request is adapted to receive a request for modifying and/or deleting the information of the navigation items of the user, the request being input by the user. The returning sub-unit is adapted to return the result of processing the request by the website navigation server.

The processing unit is adapted to process requests of website navigation sent from the client and includes a navigation item addition request processing sub-unit and a page forward request processing sub-unit. Preferably, the processing unit may further include a navigation information request processing sub-unit. The navigation item addition request processing sub-unit is adapted to store a corresponding relation between the page characteristic information and the character string information in the website navigation information of the user of the database upon receiving the request. The page forward request processing sub-unit is adapted to first find the page characteristic information corresponding to the character string information input by the user from the website navigation information of the user stored in the database and then to forward to a corresponding page, upon receiving the request. The navigation information request processing sub-unit is adapted to modify and/or delete the website navigation information of the user stored in the database according to a request from the user. The forwarding to a corresponding page refers to the following situations: if the target website including the page that the user needs to access is not the website providing the navigation service, the website navigation server redirects the connection request to the target website, the target website connects with the client and sends data of the corresponding page to the client to display upon receiving the connection request. If the target website including the page that the user needs to access is the website providing the navigation service, the website navigation server sends the connection request to the web server, the web server connects with the client and sends data of the corresponding page to the client to display.

The interface unit and the processor unit are usually implemented by software programming.

The processing unit further includes a second judging sub-unit adapted to compare the character string information with character string information of all navigation items of the user pre-stored in the database upon receiving the navigation item addition request and if all the navigation items of the user pre-stored in the database includes the same character string information as that in the navigation item addition request, the judging sub-unit returns information.

The processing unit further includes a third judging sub-unit adapted, upon receiving a relevant request for website navigation customization sent from the client, to pre-judge whether the user is logged on, and if not, to forward to a website log-on page to request the user to log on first. If it is pre-set that a user shall first log on the website, the third judging sub-unit does not need to perform the judgment on receiving the relevant request for website navigation customization sent from the client.

The processing unit further includes a first judging sub-unit adapted, upon receiving the navigation item addition request, to judge whether the page corresponding to the page characteristic information input by the user is a page of the current website; if so, to transmit the request to the navigation item addition request processing sub-unit; and if not, to return failure information. In the present invention, the first judging sub-unit may be utilized to limit the setting of cross-website navigation of the user. Of course, it is possible in the present invention that the first judging sub-unit is not provided to support the setting of cross-website navigations of the user.

In the present invention, the interface unit is usually arranged in the web server in consideration that there are also multiple interfaces for interacting with the client at the website. Of course, as an application module, the processing unit may be arranged in the web server, which is described as bellow.

The database is adapted to store corresponding relations between the page characteristic information and the character string information of all navigation items of the user in the website navigation information of each user by treating each user as a unit. The database may be a separate server or may be integrated in the website navigation server.

The processing unit determines whether there is website navigation information for the user in the database whenever the processing unit processes a navigation item addition request and if the processing unit determines that there is website navigation information of the user in the database, it adds the navigation item (the page characteristic information and the character string information) to the website navigation information of the user; otherwise, the processing unit creates website navigation information of the user in the database and adds the navigation item (including the corresponding relationship between the page characteristic information and the character string information) to the website navigation information of the user.

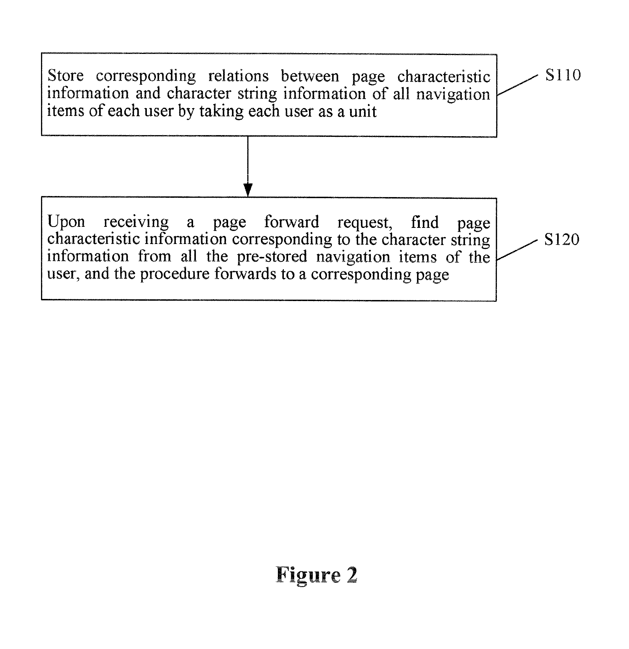

Figure 2 is a flowchart of a website navigation method according to the present invention. Referring to Figure 2, the method includes the following steps:

S110: Corresponding relations between page characteristic information and character string information of all navigation items of each user are stored by treating each user as a unit. Step S110 may be implemented by the following steps.

After a user logs on a website providing customized navigations, a connection is established between a client of the user and a web server, e.g. a connection is established via the Internet.

When the client sends to the web server a user-entered navigation item addition request including page characteristic information and character string information, an interface unit sends the navigation item addition request to a processing unit.

A corresponding relationship between the page characteristic information and the character string information is stored in website navigation information of the user of a database.

S120: After a page forward request including at least character string information is received, page characteristic information corresponding to the character string information is found from all the pre-stored navigation items of the user and the procedure forwards to a corresponding page.

Step S120 may be implemented by the following steps:

After the client of the user sends the page forward request including the character string information, the interface unit sends the page forward request to the processing unit. The processing unit finds the page characteristic information and redirects the request to a target website, so as to send the page information to the client to display.

The method further includes: receiving from the user a request for modifying and/or deleting the website navigation information of the user and modifying and/or deleting the pre-stored website navigation information of the user correspondingly according to the request from the user.

It can be seen from the above steps that in the case that corresponding relations between page characteristic information and character string information of all navigation items of each user are stored by taking each user as a unit, it needs only to ensure that character strings of all navigation items of this user are different from each other. In this manner, the number of pages that be customized is infinite navigation configurations of all users are independent from each other and do not conflict. If a user inputs a character spring, he can forward to a page corresponding to the customized character string rapidly, thereby attaining the object of convenience.

In order to facilitate the understanding of those skilled in the art, the implementing process of the present invention is described with reference to a detailed embodiment.

First, after a user logs on a website, the website pops up an interactive interface upon receiving a customized website navigation request from the user. The interactive interface may include: an interactive interface for adding a navigation item, an interactive interface for page forwarding and an interactive interface for processing navigation items.

Upon receiving a navigation item addition request from the user, the website obtains page characteristic information (e.g., a URL address) and character string information input by the user, compares the character string information input by the user with pre-stored character string information of all navigation items of the user; if the pre-stored character string information of all navigation items of the user includes the same character string information as that input by the user, the website returns failure information to prompt the user to input new character string information; otherwise, the website proceeds to subsequent steps.

Subsequently, the website judges whether the page corresponding to the page characteristic information input by the user is a page of its own; if so, the website proceeds to subsequent steps; otherwise, the website returns failure information.

Subsequently, a corresponding relation between the page characteristic information and the character string information input by the user is stored in website navigation information of the user of a database.

Upon receiving a page forward request from the user, the website searches in the website navigation information of the user of the database, finds the same character string as that input by the user, extracts corresponding page characteristic information and forwards to the page.

Upon receiving a navigation information processing request from the user, the website finds the website navigation information of the user of the database and deletes the corresponding relation between the page characteristic information and the character string information from a navigation item if the request indicates to delete the navigation item and the website finds the stored website navigation information of the user and modifies corresponding page characteristic information or character string information if the request indicates to modify a navigation item.

In consideration of the cost, a new server is usually not added at the website for providing the customized navigation function for users. In other words, in a preferred embodiment of the present invention, the website uses the existing web server and integrates the above website navigation server as an application module in the existing web server.

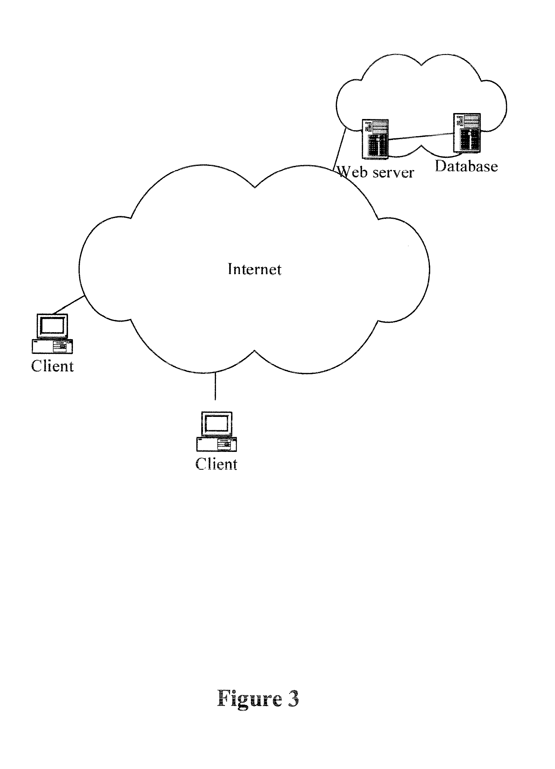

Figure 3 is another structural schematic diagram of the website navigation system according to the present invention. The website navigation system includes a web server and a database. The web server includes an interface unit and a processing unit.

The interface unit is adapted to establish an interaction between the web server and a client of a user. The interface unit includes a navigation item addition request receiving sub-unit and a page forward request receiving sub-unit. The navigation item addition request receiving sub-unit is adapted to receive from the client a navigation addition request including page characteristic information and corresponding character string information. The page forward request receiving sub-unit is adapted to receive from the client a page forward including character string information.

The processing unit is adapted to process a request from the user. The processing unit includes a navigation item addition request processing sub-unit and a page forward request processing sub-unit. The navigation item addition request processing sub-unit is adapted to store a corresponding relation between the page characteristic information and the character string information in websites navigation information of the user of the database upon receiving the request. If the website is configured not to support cross-website navigation, the navigation item addition request processing sub-unit may, upon receiving the request, first determine that the page corresponding to the page characteristic information is a page of its own and then store the corresponding relation between the page characteristic information and the character string information in the website navigation information of the user of the database. The page forward request processing sub-unit is adapted to first find page characteristic information corresponding to the character string information from the website navigation information of the user stored in the database and then to forward to a corresponding page, upon receiving the request.

The database is adapted to store corresponding relations between page characteristic information and character string information of all navigation items of the user in the website navigation information of each user by taking each user as a unit. The database may be a separate server connected with the web server, or may be integrated in the web server. Usually, the database is integrated in the web server.

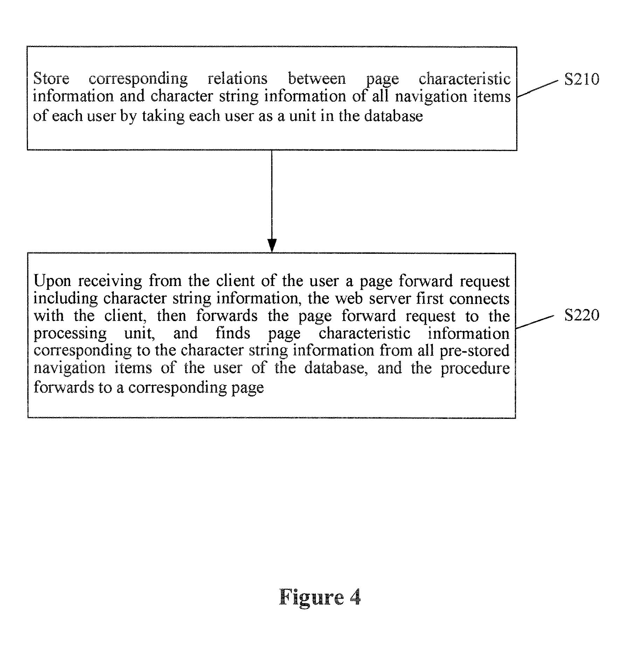

Based on the above system, a navigation according to the present invention is similar to that of Figure 2. However, in the case that the website does not support cross-website navigation, the method bring further effects. Figure 4 is a flowchart of a navigation method based on Figure 3 if cross-website navigation is not supported. The method includes the following steps.

S210: Corresponding relations between page characteristic information and character string information of all navigation items of each user by treating each user as a unit are stored in the database. Step S210 may be implemented by the following steps.

After a user logs on a website providing customized navigations, a connection is established between a client of the user and the web server.

When the client sends to the web server a navigation item addition request including page characteristic information and character string information, the request being input by the user, the interface unit sends the navigation item addition request to the processing unit.

A corresponding relationship between the page characteristic information and the character string information is stored in website navigation information of the user of the database.

S220: Upon receiving from the client of the user a page forward request including character string information, the web server first connects with the client and then forwards the page forward request to the processing unit. The processing unit finds page characteristic information corresponding to the character string information from all pre-stored navigation items of the user of the database and the procedure forwards to a corresponding page.

Preferably, the web server, upon receiving from the client a request for modifying and/or deleting the information of the navigation items of the user, modifies and/or the pre-stored website navigation information of the user correspondingly according to the request.

The implementing process of this embodiment is similar to that of the corresponding steps of the above method and is not repeated here.

Because the forward-to page belongs to the same website, the web server does not need to redirect the connection request to the target website. Usually, the web server forwards the connection request to an application module processing the page where the application module sends data of page via the web server to the client to display. In this case, only a connection between the web server and the client is needed unlike the need of usually two connections in the prior art.

As can be seen from the above disclosed technical solution, the present invention has the following advantages.

First, with the technical solution of the present invention, a user can forward one time from a page to another page of a website rapidly. According to the present invention, corresponding relations between page characteristic information and character string information of all navigation items of each user are stored in a database by treating each user as a unit. Therefore, when customized navigations are set, it only requires that character strings of all navigation items of this user are different from each other, and it does not require that the character string input by the user this time is different from character strings of all navigation items stored in the database. Therefore, there does not exist the problem of conflict between character strings customized by different users and also the user can customize character strings with a good extensibility, thus the website navigation of the present invention has a good availability. In other words, in this manner, each user can customize infinite numbers of pages and navigation of the users are independent from each other and do not conflict, i.e., in the present invention the customized website navigation for each user is independent from others and the customized website navigations of respective users do not conflict. Therefore, the solution of the present invention has a good availability.

Second, if a website of a desired page is the one providing customized navigation service, a web server does not need to redirect a connection request to a target website. Usually, the web server forwards the connection request to an application module processing the page where the application module sends data of page via the web server to the client to display. In this case, only a connection between the web server and the client is needed unlike the need of two connections in the prior art, thereby improving the navigation speed.

Then, the present invention can provide not only navigation in a current website but also cross-website navigation. In the prior art the website urlcut provides cross-website navigation service, which fails in the case that non-stability arises at the website. In the present invention, whether to provide cross-website navigation may be determined according to situations of respective websites (e.g. resource).

Finally, in the present invention the user can delete or modify the pre-stored navigation configurations of its own with convenience. Moreover, if the user deletes unused or unconcerned page navigations, the use rate of storage space of the database can be improved.

The above disclosure is merely detailed embodiments of the present invention. The present invention shall not be limited to the disclosure. Any variations that can be made by a person skilled in the art within the disclosure shall fall into the scope of the present invention.

## Claims

1. A website navigation system, comprising at least a website navigation server and a database, wherein:
the database is adapted to store corresponding relations between page characteristic information and character string information in all navigation items of each user by treating each user as a unit; and
the website navigation server is adapted, upon receiving a page forward request including character string information sent from a client of a user, to find page characteristic information corresponding to the character string information from all navigation items of the user pre-stored in the database and to forward to a corresponding page.

2. The website navigation system according to claim 1, wherein the website navigation server comprises:
an interface unit, which is adapted to establish an interaction between the website navigation server and the client of the user and comprises:
a navigation item addition request receiving sub-unit and a page forward request receiving sub-unit, wherein
the navigation item addition request receiving sub-unit is adapted to receive and send a navigation item addition request comprising page characteristic information corresponding
the page forward request receiving sub-unit is adapted to receive and send the page forward request comprising the character string information, the forward request being sent from the client; and
the processing unit, which is adapted to process the navigation item addition request and the page forward request sent from the interface unit and comprises a navigation item addition request processing sub-unit and a page forward request processing sub-unit, wherein:
the navigation item addition request processing sub-unit is adapted to store a corresponding relation between the page characteristic information and the character string information of the navigation item addition request in website navigation information of the user of the database upon receiving the navigation item addition request;
the page forward request processing sub-unit is adapted to first find page characteristic information corresponding to the character string information from the website navigation information of the user stored in the database and then to forward to a corresponding page upon receiving the page forward request.

3. The website navigation system according to claim 2, wherein the processing unit further comprises:
a first judging sub-unit adapted to judge whether the page corresponding to the page characteristic information carried in the navigation item addition request is a page of a current website, to transmit a positive determining result to the navigation item addition request processing sub-unit and to return failure information if the first judging sub-unit judges that the page is not a page of the current website.

4. The website navigation system according to claim 2 or 3, wherein the processing unit further comprises:
a second judging sub-unit adapted, upon receiving the navigation item addition request, to compare the character string information carried in the request with character string information of all navigation items of the user pre-stored in the database; if all the navigation items of the user pre-stored in the database comprises the same character string information as that in the navigation item addition request, to return failure information; otherwise, to send a negative comparing result to the navigation item addition request processing sub-unit.

5. The website navigation system according to claim 4, wherein
the interface unit further comprises: a receiving sub-unit for processing a navigation information request adapted to receive from the client a request for modifying and/or deleting information of the navigation items;
the processing unit further comprises: a navigation information request processing sub-unit adapted to modify and/or delete the corresponding information of the navigation items of the user stored in the database according to the received request.

6. The website navigation system according to claim 1, wherein the website navigation server is a separate server connected with the web server or an application module arranged in the web server.

7. The website navigation system according to claim 1 or 6, wherein the database is a server connected with the website navigation server, or is integrated in the website navigation server.

8. A website navigation method, comprising:
(1) storing corresponding relations between page characteristic information and character string information of all navigation items of each user by treating each user as a unit; and
(2) upon receiving a page forward request comprising character string information sent from a client of a user, finding page characteristic information corresponding to the character string information from all pre-stored navigation items of the user and forwarding to a corresponding page.

9. The website navigation method according to claim 8, wherein the step (1) further comprises:
(A1) receiving a navigation item addition request comprising page characteristic information and character string information sent from the client; and
(A2) storing a corresponding relation between the page characteristic information and the character string information in website navigation information of the user of a database.

10. The website navigation method according to claim 9, wherein between the steps A1 and A2, the method further comprises:
comparing the character string information carried in the navigation item addition request with character string information of all pre-stored navigation of the user; if all the pre-stored navigation items of the user comprise the character string information as that in the navigation item addition request, returning failure information to prompt the user to input new character string information; otherwise, going to the step A2.

11. The website navigation method according to claim 9 or 10, wherein between the steps A1 and A2, the method further comprises:
judging whether the page corresponding to the page characteristic information carried in the navigation item addition request is a page of a current website; if the first judging sub-unit judges that the page is a page of the current website, going to the step A2; otherwise, returning failure information.

12. The website navigation method according to claim 8, further comprising:
(3) receiving from the client a request for modifying and/or deleting information of the navigation items and modifying and/or deleting the pre-stored information of the navigation items of the user correspondingly according to the request.

13. A website navigation system, comprising a reb server and a database, the web server comprising an interface unit and a processing unit, wherein:
the interface unit is adapted to establish an interaction between the web server and a client of a user and to send a navigation item addition request comprising page characteristic information and corresponding character string information and a page forward request comprising character string information from the client;
the processing unit is adapted, upon deceiving the navigation item addition two first determine that the page corresponding to the characteristic information carried in the navigation item addition is a page of a current website and to store a corresponding relation between the characteristic information the character string information in website navigation information of the user of the database; and upon receiving the page forward request, to search for page characteristic information corresponding to the character string information carried in the page forward request in the database and then to forward to a corresponding page;
the database is adapted to store corresponding relations between page characteristic information and character string information of all navigation items of the user in website navigation information of each user by treating each user as a unit.

14. The website navigation system according to claim 13, wherein:
the interface unit comprises:
a navigation item addition request receiving sub-unit adapted to receive and send the navigation item addition request comprising the page characteristic information and corresponding character string information from the client; and
a page forward request receiving sub-unit adapted to receive and send the page forward request comprising the character string information from the client;
the processing unit comprises:
a navigation item addition request processing sub-unit adapted to store the corresponding relation between the page characteristic information and the character string information of the navigation item addition request in the website navigation information of the user of the database upon receiving the navigation item addition request; and
a page forward processing sub-unit adapted to first find page characteristic information corresponding to the character string information from the website navigation information of the user stored in the database and then to forward to a corresponding page upon receiving the page forward request.

15. The website navigation system according to claim 13, wherein the database is a separate server connected with the web server or is integrated in the web server.

16. A website navigation method, comprising:
(1) storing corresponding relations between page characteristic information and character string information of all navigation items of each user in a database by treating each user as a unit; and
(2) upon receiving a page forward request comprising character string information sent from a client of a user, establishing a connection between a web server and the client, determining the page is a page of a current website, finding page characteristic information corresponding to the character string information carried in the page forward request from all navigation items of the user pre-stored in the database and forwarding to a corresponding page, by the web server.

17. The website navigation method according to claim 16, further comprising:
(3) receiving from the client a request for modifying and/or deleting information of the navigation items and modifying and/or deleting the pre-stored information of the navigation items of the user correspondingly according to the request.
